# EUROPÄISCHE PATENTSCHRIFT

(11) **EP 0 946 665 B1**
(45) Veröffentlichungstag und Bekanntmachung des Hinweises auf die Patenterteilung: **12.07.2000**
(21) Anmeldenummer: 97953846.9
(22) Anmeldetag: 18.12.1997
(51) Int. Cl.: C09J 7/04, B32B 7/10

(54) **PAPIERVERBUNDMATERIAL MIT REPULPIERFEST AUSGERÜSTETER HAFTKLEBERBESCHICHTUNG**
PAPER COMPOUND MATERIAL WITH REPULP-RESISTANT ADHESIVE COATING
MATERIAU COMPOSITE A BASE DE PAPIER, COMPORTANT UN REVETEMENT ADHESIF RESISTANT A LA DESINTEGRATION

(30) Priorität: 23.12.1996 DE 19654177
(43) Veröffentlichungstag der Anmeldung: 06.10.1999
(73) Patentinhaber: Wacker-Chemie GmbH, 81737 München (DE)
(72) Erfinder: WEISSGERBER, Rudolf, D-84489 Burghausen (DE); BASTELBERGER, Thomas, D-84547 Emmerting (DE)
(74) Vertreter: Schuderer, Michael, Dr.
(86) Internationale Anmeldenummer: EP9707106
(87) Internationale Veröffentlichungsnummer: WO9828378

(56) Entgegenhaltungen:
- EP-A- 0 622 432
- DE-B- 1 228 358
- DATABASE WPI Section Ch, Week 9515 Derwent Publications Ltd., London, GB; Class E14, AN 95-110865 XP002063686 & JP 07 034 056 A (GOI KASEI KK) , 3.Februar 1995
- PATENT ABSTRACTS OF JAPAN vol. 015, no. 461 (C-0887), 22.November 1991 & JP 03 197576 A (SEKISUI CHEM CO LTD), 28.August 1991,

## Beschreibung

Die Erfindung betrifft ein Papierverbundmaterial, speziell Etiketten, mit repulpierfest ausgerüsteter Haftkleberbeschichtung sowie ein Verfahren zu dessen Herstellung.

Altpapier wird in hohem Prozentsatz gesammelt und wiederverwertet. Das Altpapier enthält dabei eine Reihe von nicht aus Zellulose bestehenden "Verunreinigungen" wie zum Beispiel Klebebänder, Folienmaterialien, Verbundmaterialien und Klebstoff-Filme. Zum Recycling wird das gesammelte Altpapier in einem Pulper (Zerfaserer) in Wasser, bei einem neutralen bis alkalischen pH-Wert, durch mechanische Einwirkung möglichst bis zu den einzelnen Zellulosefasern zerlegt. Anschließend erfolgt die Reinigung in einem mehrstufigen Prozeß mit dem Ziel einen möglichst reinen Brei aus Zellulosefasern zu erhalten, der störungsfrei auf der Papiermaschine eingesetzt werden kann. Die Reinigungsschritte enthalten praktisch immer eine Siebung, üblicherweise mittels Sieben mit Schlitzlöchern, beispielsweise mit circa 0.15 mm Lochbreite. Vereinzelt wird danach zusätzlich eine Flotation durchgeführt; insbesonders wenn zur Erreichung besserer Papierqualitäten Druckfarben entfernt werden sollen (De-Inking).

Bei der Verarbeitung von aus Altpapier gewonnenen Faserbreien auf schnellaufenden Papiermaschinen kommt es dabei immer wieder zu Störungen durch die Bildung von sogenannten "Stickies", beispielsweise aufgrund der Reste von Haftkleberschichten von Etiketten, die beim Aufbereitungsprozeß nicht abgetrennt worden sind. Unter "Stickies" versteht man dabei Brocken bzw. Zusammenballungen von bevorzugt eigenklebrigen Polymeren, die sich im neu hergestellten Papier durch "fettige" Flecken und Verklebungen von einzelnen Bogen bemerkbar machen. Weiter lagern sich Stickies beispielsweise auf Rollen und Sieben der Papiermaschinen ab und führen dadurch zu Störungen im Betriebsablauf, beispielsweise zu Bahnabrissen. Beides verursacht hohe Kosten. Die zunehmende Einführung von geschlossenen Wasserkreisläufen bei der Altpapieraufbereitung und die zunehmende Menge an Klebstoffanteilen im Altpapier, speziell an Haftklebstoffen durch weitere Verbreitung von haftklebenden Papieretiketten, haben in den letzten Jahren zu einer wesentlichen Verschärfung des Sticky-Problems geführt.

Es werden deshalb Lösungswege gesucht, zur Abtrennung von Klebstoffresten aus dem Faserbrei bei der Altpapierwiederverwertung. Dies gestaltet sich speziell bei Filmen aus Haftklebstoffen schwierig, da diese beim Zerfasern in kleine Stücke zerfallen. Durch die Größe der Stücke und die Weichheit bzw. Flexibilität dieser selbstklebenden Massen lassen sich diese durch Sieben nur sehr eingeschränkt entfernen.

In der WO-A 93/08239 wird vorgeschlagen recyclingfähige Etiketten mit einer repulpierbaren Haftkleberschicht einzusetzen, wobei die Haftkleberschicht aus einem Acrylatpolymeren mit 10 bis 20 % Anteil an carboxlgruppenhaltigen Comonomereinheiten besteht. In der WO-A 94/17998 wird ein ähnlicher Weg beschritten, mit dem Unterschied, daß 10 bis 20 % Hydroxyethylmethacrylat-Einheiten copolymerisiert werden.In der WO-A 96/08539 werden repulpierbare Etiketten beschrieben, welche mit zwei unterschiedlichen Haftkleberschichten ausgerüstet sind. Die Repulpierfestigkeit der Haftklebekomponente wird dadurch erhalten, daß auf den Papierträger eine in Wasser dispergierbare Haftkleberschicht aufgetragen wird, welche anschließend mit einer in Wasser nicht redispergierbaren Haftkleberschicht kaschiert wird.

Nachteilig ist, daß es beim Repulpieren zur Anreicherung von redispergierten Teilchen der dispergierbaren Haftkleberschicht kommt, die das Risiko der Bildung von Stickies beinhalten und aufwendig entfernt werden müssen, beispielsweise durch einen zusätzlichen Flotationsschritt. Wird kein zusätzlicher Flotationsschritt durchgeführt, muß das Abwasser in Kläranlagen gereinigt werden bzw. belastet den Vorfluter.

In der EP-A 438781 werden Etiketten beansprucht, welche aus einer Papierschicht, einem repulpierfestem Polymerfilm und einem repulpierfestem Haftkleber zusammengesetzt sind. Der Kunststoff-Film wird dabei auf das Papier aufextrudiert oder als Schmelze flüssig aufgetragen. Die Haftkleberschicht wird gegebenenfalls mit einer zusätzlichen Primerschicht auf dem Film verankert. Nachteilig ist, daß bei Auftragung des Polymerfilms im flüssigen Zustand die Papierfasern mit flüssigem Polymer umhüllt und gebunden werden. Die Fasern werden daher beim Repulpieren nicht mehr freigesetzt und gehen bei der Wiederverwertung verloren. Ein weiterer Nachteil besteht darin, daß ein pulperisierungsfester Haftkleber aufgetragen wird, Haftkleber im allgemeinen aber nicht pulperisierungsfest sind.

Es bestand somit die Aufgabe, Etiketten auf der Basis von Papierträger und herkömmlichen Haftklebemitteln zur Verfügung zu stellen, welche so ausgerüstet sind, daß die Haftkleberschicht bei der Pulperisierung nicht vollständig zerfällt, sondern in Form siebbarer Teilchen anfällt, und die Papierfaser beim Repulpieren vollständig freigesetzt wird.

Gelöst wurde die Aufgabe mit einer feuchtigkeitsfesten, nicht-repulpierbaren, aber hydrophilen Zwischenschicht, welche in Form einer wässrigen Dispersion aufgetragen wird.

Gegenstand der Erfindung ist ein Papierverbundmaterial mit repulpierfest ausgerüsteter Haftkleberbeschichtung, bestehend aus einem Papierträger und einer Haftkleberschicht, dadurch gekennzeichnet, daß zwischen Papierträger und Haftkleberschicht eine Zwischenschicht aus einem Schutzkolloid- und/oder Emulgatorhaltigen Dispersionspolymerfilm mit einer Glasübergangstemperatur Tg von -20°C bis +40°C aufgetragen ist.

Ein weiterer Gegenstand der Erfindung ist ein Verfahren zur Herstellung eines Papierverbundmaterials mit repulpierfest ausgerüsteter Haftkleberbeschichtung, dadurch gekennzeichnet, daß
a) in einem ersten Verfahrensschritt zur Herstellung der Zwischenschicht eine wäßrige Dispersion eines Schutzkolloid- und/oder Emulgator-stabilisierten Homo- oder Copolymerisats mit einer Glasübergangstemperatur Tg von -20°C bis +40°C aus der Gruppe der Homo- oder Copolymerisate von Vinylestern von Alkylcarbonsäuren mit 1 bis 15 C-Atomen, der Homo- oder Copolymerisate von Estern der (Meth)acrylsäure von Alkoholen mit 1 bis 12 C-Atomen, der Styrol-Butadien-Copolymerisate, aufgetragen und getrocknet wird, und
b) in einem zweiten Verfahrensschritt eine Haftklebstoff-Zusammensetzung auf die Polymerschicht aus dem ersten Verfahrensschritt aufgetragen und gegebenenfalls getrocknet wird.

Als Papierträger können die, speziell für die Etikettenherstellung gängigen, ungestrichenen oder gestrichenen Papiersorten eingesetzt werden.

Geeignete Polymerisate für die feuchtigkeitsfeste Zwischenschicht mit hydrophiler Oberfläche sind Schutzkolloid-und/oder Emulgator-stabilisierte Homo- oder Copolymerisate aus der Gruppe der Homo- oder Copolymerisate von Vinylestern von Alkylcarbonsäuren mit 1 bis 15 C-Atomen; der Homo- oder Copolymerisate von Estern der Acrylsäure oder Methacrylsäure von Alkoholen mit 1 bis 12 C-Atomen, gegebenenfalls in Kombination mit Styrol; und der Styrol-Butadien-Copolymerisate.

Unter feuchtigkeitsfest ist dabei zu verstehen, daß die Zwischenschicht den Repulpiervorgang übersteht, ohne vollständig in nicht-siebbare Teilchen zu zerfallen. Die hydrophile Oberfläche wird durch den Schutzkolloid- bzw. Emulgator-Anteil, gegebenenfalls durch Hilfsmonomere, bedingt und erleichtert die Ablösung der Zwischenschicht von der Papierfaser.

Bevorzugte Vinylester sind Vinylacetat, Vinylpropionat, Vinyl-2-ethylhexanoat, Vinyllaurat, 1-Methylvinylacetat, Vinylpivalat und Vinylester von alpha-verzweigten Monocarbonsäuren mit 5 bis 10 C-Atomen, beispielsweise VV5^{R}, VeoVa9^{R} oder VeoVa10^{R}. Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, iso-Butylacrylat, iso-Butylmethacrylat, t-Butylacrylat, t-Butylmethacrylat, 2-Ethylhexylacrylat, 2-Ethylhexylmethacrylat. Besonders bevorzugt sind Methylacrylat, Methylmethacrylat, n-Butylacrylat und 2-Ethylhexylacrylat.

Gegebenenfalls können in einer bevorzugten Ausführungsform bis zu einem Anteil von 5 Gew%, bezogen auf das Gesamtgewicht des Polymerisats, noch wasserlösliche, ethylenisch ungesättigte Monomere copolymerisiert sein. Beispiele hierfür sind Acrylsäure, Methacrylsäure, Acrylamid, Methacrylamid, Hydroxyethylacrylat, Hydroxyethylmethacrylat, Hydroxypropylacrylat, Hydroxypropylmethacrylat, Acrylamidopropansulfonsäure.

Beispiele für geeignete Vinylester-Polymerisate, welche gegebenenfalls noch wasserlösliche oder vernetzbare, ethylenisch ungesättigten Monomere enthalten, sind:
Vinylacetat-Homopolymerisat, Vinylacetat-Ethylen-Copolymere, Vinylacetat-Ethylen-Vinylchlorid-Copolymere, Vinylacetat-Copolymerisate mit Vinylester einer alpha-verzweigten Carbonsäure mit 5 bis 10 C-Atomen, Vinylacetat-n-Butylacrylat-Copolymerisate.

Beispiele für geeignete (Meth)acrylsäurepolymerisate sind: Copolymerisate von Methylmethacrylat mit n-Butylacrylat und/oder 2-Ethylhexylacrylat, sowie Copolymerisate des n-Butylacrylats oder 2-Ethylhexylacrylats mit Styrol.

Die Monomerauswahl bzw. die Auswahl der Gewichtsanteile der Comonomere erfolgt dabei so, daß die Homo- und Copolymerisate eine Glasübergangstemperatur Tg von -20°C bis +40°C, vorzugsweise -15°C bis +25°C, insbesonders -5°C bis +10°C, aufweisen. Ist eine besonders hohe Steifigkeit des Papierverbundmaterials erwünscht, wird der Einsatz von Polymeren mit hoher Tg bevorzugt. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 2nd Edition, J. Wiley & Sons, New York (1975) aufgeführt.

Zur Verbesserung der Repulpierfestigkeit können die Dispersionspolymere der Zwischenschicht gegebenenfalls noch, vorzugsweise 0.1 bis 5 Gew%, jeweils bezogen auf das Gesamtgewicht des Polymerisats, ein oder mehrere Hilfsmonomereinheiten zur Vernetzung enthalten. Beispiele hierfür sind N-Methylolacrylamid, N-Methylolmethacrylamid; N-(Alkoxymethyl)acrylamide oder N-(Alkoxymethyl)methacrylamide mit einem C₁- bis C₆-Alkylrest, wie N-(Isobutoxymethyl)-acrylamid (IBMA), N-(Isobutoxymethyl)-methacrylamid (IBMMA), N-(n-Butoxymethyl)-acrylamid (NBMA), N-(n-Butoxymethyl)-methacrylamid (NBMMA). Die Vernetzung kann bei diesen Comonomeren gegebenenfalls noch durch Zusatz von sauren Härtern, beispielsweise Metallsalzen von Al(III) wie Al-Nitrat, Al-Chlorid, Cr(III)-Salze wie Chromnitrat und Zr(IV)-Salze wie Zirkonoxychlorid, gefördert werden. Der Anteil an Metallsalz beträgt im allgemeinen 0.5 bis 5.0 Gew%, bezogen auf das Gesamtgewicht des Polymerisats.

Weitere Beispiele für vernetzend wirkende Comonomere sind mehrfach ethylenisch ungesättigte Comonomere wie Ethylenglycoldiacrylat, 1,3-Butylenglycoldiacrylat, 1,4-Butylenglycoldiacrylat, Propylenglycoldiacrylat, Divinyladipat, Divinylbenzol, Vinylmethacrylat, Vinylacrylat, Allylmethacrylat, Allylacrylat, Diallylmaleat, Diallylphthalat, Diallylfumarat, Methylenbisacrylamid, Cyclopentadienylacrylat oder Triallylcyanurat. Die Repulpierfestigkeit kann auch durch externe Vernetzung durch Zusatz von di- oder multifunktionellen Vernetzern, beispielsweise di- oder multifunktionelle Isocyanate wie Hexamethylendiisocyanat, 2.4- und 2.6-Toluylendiisocyanat verbessert werden. Geeignet sind auch carbonylgruppenhaltige Comonomere wie Diacetonacrylamid oder Crotonaldehyd, welche durch Zusatz von hydrazidgruppenhaltigen Vernetzern wie Adipinsäuredihydrazid oder von aminooxygruppenhaltigen Vernetzern wie 1,4-Diaminooxybutan oder 2-Amino-oxy-propionsäurehydrazid zur Vernetzung bzw. Verankerung umgesetzt werden. Der Gehalt der genannten Carbonylgruppen-haltigen Comonomeren bzw. der Vernetzer beträgt im allgemeinen 0.1 bis 3.0 Gew%, bezogen auf das Polymerisat.

Die Hydrophilie der Zwischenschicht wird vor allem durch den Gehalt an Emulgator und/oder Schutzkolloid bewirkt. Als Emulgatoren kommen alle handelsüblichen ionische und nichtionische Emulgatoren in Frage. Insbesondere können dies sein: Blockcopolymere von Ethylenoxid und Propylenoxid, ethoxylierte Alkylphenole, ethoxylierte Fettalkohole, sowie Alkali-und Ammoniumsalze von langkettigen Alkylsulfaten (C₈- bis C₁₂-Alkylrest), von Schwefelsäurehalbestern ethoxylierter Alkanole und ethoxylierter Alkylphenole, von Alkylsulfonsäuren und von Alkylarylsulfonsäuren.

Als Schutzkolloide eignen sich beispielsweise Cellulosen wie Hydroxyethylcellulose, Hydroxypropylcellulose und Carboxymethylcellulose, Stärken und Dextrine, Cyclodextrine, voll- oder teilverseifte Polyvinylalkohole, Polyethylenglykol, Polyvinylpyrrolidon, Homo- und Copolymere von Acrylamidopropansulfonsäure.

Der Emulgatorgehalt beträgt vorzugsweise 0.1 bis 5 Gew%, bezogen auf Polymer. Der Schutzkolloidgehalt beträgt vorzugsweise 0.1 bis 15 Gew%, bezogen auf Polymer. Es können auch Gemische von Emulgator und Schutzkolloid enthalten sein. Bevorzugt enthält die Zwischenschicht teilverseifte Polyvinylalkohole mit einem Hydrolysegrad von 60 bis 95 Mol%, vorzugsweise im Gemisch mit Emulgator(en).

Bevorzugt besteht die Zwischenschicht aus Vinylacetat-Ethylen-Copolymeren, gegebenenfalls mit einem Anteil an N-Methylolacrylamid und/oder den genannten wasserlöslichen ethylenisch ungesättigten Comonomeren, und Polyvinylalkohol und/oder Emulgator. Bevorzugt ist auch eine Zwischenschicht, welche Vinylacetat-Homopolymere oder Copolymere von Vinylacetat mit VeoValO sowie Polyvinylalkohol und/oder Emulgator enthält, und gegebenenfalls äußerlich weichgemacht ist.

Die Herstellung der Dispersionspolymere der Zwischenschicht erfolgt vorzugsweise nach dem Emulsionspolymerisationsverfahren in wäßriger Phase und wird mit den für die Emulsionspolymerisation üblicherweise eingesetzten wasserlöslichen Radikalbildner eingeleitet. Als Dispergiermittel werden die obengenannten, üblicherweise bei der Emulsionspolymerisation verwendeten, Emulgatoren und/oder Schutzkolloide verwendet. Vorzugsweise wird bei einer Temperatur zwischen 30 und 100°C und bei einem Druck unter 100 bar polymerisiert. Die Polymerisation wird bei einem pH von vorzugsweise 2 bis 7 durchgeführt.

Die Dicke der Zwischenschicht ist beliebig und beträgt vorzugsweise 4 bis 40 µm, besonders bevorzugt 4 bis 20 µm.

Für die Haftkleberschicht geeignet sind alle gängigen Haftkleber bzw. Haftkleberzusammensetzungen auf der Basis von Polymerdispersionen, Schmelzkleber und strahlungsvernetzbarer Systeme. Beispiele hierfür sind Acrylsäureester-Copolymere, Copolymere von Acrylsäureestern mit Vinylestern und gegebenenfalls Ethylen, Copolymere von Acrylsäureestern oder Vinylestern mit Malein- und Fumarsäureestern; oder thermoplastische Kautschuke wie Styrol-Butadien-Blockcopolymere, Styrol-Isopren-Blockcopolymere. Bevorzugt werden die Acrylsäureester-Copolymeren und die Copolymeren von Acrylsäureestern mit Vinylester und gegebenenfalls Ethylen.

Geeignete Acrylsäureester und Vinylester sind die oben erwähnten bevorzugten Vinylester wie Vinylacetat, Vinylpropionat, Vinyl-2-ethylhexanoat, Vinyllaurat, 1-Methylvinylacetat, Vinylpivalat und Vinylester von alpha-verzweigten Monocarbonsäuren mit 5 bis 10 C-Atomen, beispielsweise VV5^{R}, VeoVa9^{R} oder VeoVa10^{R}, und die bereits erwähnten Acrylsäureester wie Methylacrylat, Ethylacrylat, Propylacrylat, n-Butylacrylat, iso-Butylacrylat, t-Butylacrylat, 2-Ethylhexylacrylat, n-Octylacrylat. Für die Haftkleberschicht wird die Copolymer-zusammensetzung so gewählt, daß die Glasübergangstemperatur Tg der Copolymeren unter -20°C, vorzugsweise von -60°C bis -30°C beträgt.

Die gängigen Haftkleber-Dispersionen enthalten üblicherweise einen Anteil an wasserlöslichen, ethylenisch ungesättigten Hilfsmonomeren der obengenannten Art in Anteilen bis zu 10 Gew%, bezogen auf Polymer.

Zur Verbesserung der Haftklebrigkeit können auch Haftkleberzusammensetzungen, welche Tackifier enthalten, eingesetzt werden. Beispiele für Tackifier sind die Kolophoniumharze, welche auch als Balsamharze oder Tallharze bekannt sind, sowie deren Derivate wie dimerisiertes, disproportioniertes und hydriertes Kolophonium. Weitere Beispiele sind die Glykolester, Glycerinester und Pentaerythritester der Balsamharze wie Kolophoniumdiethylenglykolester, Kohlenwasserstoffharze, Polyterpenharze, Cumaron-Inden-Harze und Terpen-Phenol-Harze.

Die Dicke der Haftkleberschicht ist beliebig und beträgt vorzugsweise 10 bis 40 µm, besonders bevorzugt 10 bis 25 µm.

In einer bevorzugten Ausführungsform ist der Haftkleberfilm am Polymerfilm der Zwischenschicht durch chemische Vernetzung verankert. Die Vernetzung kann beispielsweise durch Verwendung von Gemischen des Haftklebers bzw. der Haftkleberzusammensetzung mit di- oder multifunktionellen Vernetzern erfolgen (2-Komponenten-Systeme). Als Vernetzer geeignet sind die gängigen Vernetzer, welche mit hydroxy-, amid- oder carboxylfunktionellen Polymeren reagieren, wie dem Polyvinylalkohol-Anteil der Zwischenschicht oder den funktionellen Monomereinheiten des Polymeren der Zwischenschicht und der Haftkleberschicht.

Beispiele für gängige Vernetzer sind Aziridine, Melaminharze, vorzugsweise di- oder multifunktionelle Isocyanate wie Methylendiphenyl-Diisocyanat (MDI) oder Isophoron-Diisocyanat. Besonders bevorzugt werden wasseremulgierbare, oligomere Polyisocyanate, welche eine Topfzeit des Klebstoffsystems von mehreren Stunden ergeben. Der Anteil an diesen Vernetzern beträgt im allgemeinen 0.5 bis 10 Gew%, vorzugsweise 0.5 bis 5 Gew%, jeweils bezogen auf das Gesamtgewicht der Haftkleber-zusammensetzung.

Eine weitere bevorzugte Ausführungsform des Haftkleberfilms, zu dessen Verankerung am Dispersionspolymerfilm der Zwischenschicht, ist der Einsatz von Haftkleber-Copolymerisaten auf der Basis der obengenannten Monomere, welche vernetzbare Comonomereinheiten enthalten. Beispiele für solche Comonomereinheiten sind epoxygruppenhaltige Monomere wie Glycidylmethacrylat. Weitere Beispiele sind N-Methylol-funktionelle Monomereinheiten wie N-Methylolacrylamid, N-Methylolmethacrylamid; N-(Alkoxymethyl)acrylamide oder N-(Alkoxymethyl)methacrylamide mit einem C₁- bis C₆-Alkylrest, wie N-(Isobutoxymethyl)-acrylamid (IBMA), N-(Isobutoxymethyl)-methacrylamid (IBMMA), N-(n-Butoxymethyl)-acrylamid (NBMA), N-(n-Butoxymethyl)-methacrylamid (NBMMA). Geeignet sind auch carbonylgruppenhaltige Comonomere wie Diacetonacrylamid oder Crotonaldehyd, welche durch Zusatz von hydrazidgruppenhaltigen Vernetzern wie Adipinsäuredihydrazid oder von aminooxygruppenhaltigen Vernetzern wie 1,4-Diaminooxybutan oder 2-Aminooxy-Propionsäurehydrazid zur Vernetzung bzw. Verankerung umgesetzt werden. Vorzugsweise beträgt der Gehalt der Comonomereinheiten 0.1 bis 3 Gew%, bezogen auf das Haftkleberpolymer.

Die Herstellung des Papierverbundmaterials kann in bekannten Beschichtungsanlagen erfolgen. Das die Zwischenschicht ausbildende Polymerisat wird in Form einer wäßrigen Dispersion mit einem Festgehalt von 30 bis 75 Gew%, vorzugsweise 50 bis 75 Gew%, besonders bevorzugt 58 bis 75 Gew% auf den Papierträger, beispielsweise mit einem Rakel aufgetragen. Man kann dabei auch so vorgehen, daß die Dispersion auf ein Releasematerial, beispielsweise ein mit Silikontrennschicht versehenes Papier aufgetragen und getrocknet wird, und durch Zukaschieren des Papierträgers direkt auf das Papier übertragen wird. Vorzugsweise wird die Polymerschicht durch direkte Auftragung der entsprechenden wäßrigen Dispersion auf den Papierträger und anschließende Trocknung im Trockenkanal hergestellt. Die Trocknungstemperatur beträgt dabei im allgemeinen zwischen 50°C und 200°C.

Zur Herstellung einer vernetzten Zwischenschicht werden Copolymerdispersionen mit vernetzbaren Comonomereinheiten eingesetzt oder ein Gemisch aus wäßriger Copolymerdispersion und dem externen Vernetzers. Die Auftragung erfolgt analog der Vorgehensweise zur Herstellung der unvernetzten Zwischenschicht. Die Vernetzung erfolgt im Trocknungsschritt. Zur Beschleunigung der Vernetzung können dabei gegebenenfalls auch Trocknungstemperaturen oberhalb 100°C, vorzugsweise bis 170°C, angewendet werden, bzw. die obengenannten Härter zugesetzt werden.

Im zweiten Verfahrensschritt wird die Haftkleberschicht auf die Zwischenschicht aufgebracht. Dies kann zeitlich versetzt nach dem Aufbringen der Zwischenschicht erfolgen (offline), oder vorzugsweise unmittelbar nach dem Aufbringen der Polymerschicht in einem Arbeitsgang (inline). Letzteres erfordert eine geeignete Auslegung der Beschichtungsanlage.

Die Haftkleberzusammensetzung, welche gegebenenfalls noch Takkifier, Verarbeitungshilfsmittel wie Entschäumer oder Netzmittel, oder externe Vernetzer enthält, kann dabei in Form einer wäßrigen Dispersion mit einem bevorzugten Festgehalt von 50 bis 75 Gew%, oder als Schmelze aufgetragen werden. Gegebenenfalls wird die Haftkleberzusammensetzung durch Strahlung, beispielsweise UV-Bestrahlung oder Elektronenstrahlung, vernetzt. Das Aufbringen der Haftkleberschicht erfolgt in üblicher Weise entweder durch direkte Auftragung auf die Zwischenschicht, beispielsweise mittels Rakel oder Walzenauftrag, oder durch Beschichten eines Trennmaterials, vorzugsweise silikonisiertes Trennpapier, mit dem Haftklebstoff, gegebenenfalls Trocknung bei vorzugsweise 50°C bis 200°C, oder Strahlenvernetzung, und anschließend Zukaschieren des mit der Zwischenschicht versehenen Papierträgers. Dabei wird die Haftkleberschicht auf den die Zwischenschicht bildenden Polymerfilm übertragen. Wenn nötig, wird beim anschließenden Aufwickeln des erhaltenen Papierverbundmaterials ein Abdeck- bzw. Trennmaterial, vorzugsweise silikonisiertes Trennpapier zugeführt.

Bei der Beschichtung mit Haftkleberzusammensetzungen mit externem Vernetzer oder bei der Beschichtung mit Haftklebern auf der Basis von Copolymeren mit vernetzbaren Monomereinheiten wird vorzugsweise der Haftkleber als wäßrige Dispersion direkt auf die Zwischenschicht, beispielsweise durch Aufrakeln, aufgebracht. Zur Vernetzung erfolgt die Trocknung bei Raumtemperatur oder erhöhter Temperatur, vorzugsweise bei Temperaturen von 100°C bis 200°C. Anschließend wird beim Aufwickeln des erhaltenen Papierverbundmaterials ein Abdeck- bzw. Trennmaterial, vorzugsweise silikonisiertes Trennpapier, zugeführt.

Bei dem erfindungsgemäßen Papierverbundmaterial wird durch Einführung der feuchtigkeitsfesten und hydrophilen Zwischenschicht ein Verbund bereitgestellt, der beim Repulpieren die Papierfaser nahezu vollständig freigibt und den Faserverlust gering hält. Die Klebstoffschicht fällt beim Repulpieren zusammen mit der Zwischenschicht in solch großen Stücken an, daß ein nahezu vollständiges Absieben dieser Stücke mit den beim Papierrecycling üblichen Sieben möglich ist. Folglich ist zum Abtrennen der Haftklebstoff-Teilchen aus der Pulpe kein spezieller Reinigungsschritt, beispielsweise Flotation, erforderlich. Die Polymeranreicherung im Wasserkreislauf der Papiermaschine wird wirksam verhindert. Das Risiko der Bildung von Stickies ist minimiert und der Gehalt des Abwassers an organischen Bestandteilen, speziell Polymer, stark reduziert.

Die nachfolgenden Beispiele dienen zur weiteren Erläuterung der Erfindung:

### Prüfmethode:

Zum Repulpen wurden in einem 400 ml Becherglas 250 g Wasser vorgelegt, 4 g beschichtetes Etikettenpapier (80 g/m² Vellum-Papier) wurde in Stücke von ca. 2x2 cm zerrissen und möglichst frei von Klumpen im Wasser aufgeschlämmt. Wasser und Etikettenpapier wurden in einen Küchenmixer übergeführt (Moulinex Typ D 70) und bei Drehzahlstufe 3 zwanzig Minuten lang zerfasert. Anschließend wurde der Inhalt des Mixers in ein 1 1 Becherglas gegeben und auf 400 g Gesamtmenge Wasser und Faserbrei aufgefüllt. Die Mischung wurde dann mit einem Flügelrührer mit ca. 1200 UpM eine Minute lang homogenisiert. Aus der homogenen Mischung wurden ca. 5 g entnommen und auf einem saugenden Papier auf eine Fläche von ca. 5x5 cm verteilt. Die Größe der Klebstoffpartikel wurde ausgemessen. Die Ablösung der Haftkleberschicht von der Zwischenschicht sowie die Anhaftung der Papierfaser an der Zwischenschicht wurde qualitativ beurteilt.
Die Dispersion zur Herstellung der Zwischenschicht und der Haftklebstoff wurden durch Zusatz geringer Mengen (< 0.5 %) unterschiedlicher Farbstoffe (beispielsweise Helizarin-Blau) eingefärbt. Auf diese Weise konnten Zwischenschicht und Haftkleberschicht in der Pulpe unterschieden werden.

### Beispiel 1:

Eine wässrige Dispersion eines Copolymeren aus Vinylacetat und Ethylen (Ethylengehalt ca. 18 Gew%; Tg(DSC) = 3°C) mit 4 Gew% Polyvinylalkohol (Hydrolysegrad 88 %) und 0.5 Gew% eines Alkylalkoholethoxylat-Emulgators, jeweils bezogen auf den Polymeranteil, wurde mit Hilfe eines Drahtrakels auf 80 g/m² Vellum-Papier in einer Schichtdicke von 15 µm (trocken) aufgetragen. Auf die trockene Zwischenschicht wurde in einer Schichtdicke von 18 µm (trocken) eine wässrige Dispersion einer Haftkleber-Zusammensetzung aus einem Acrylsäureester-Copolymeren (Tg = -57°C; 40 Gew%), einem Copolymer aus Vinylacetat, Ethylen, Acrylsäureester (Tg = -35°C; 30 Gew%) und disproportioniertem Kolophonium als Tackifier (30 Gew% bezogen auf Trokkenmasse) sowie Netzmittel und Entschäumer aufgetragen.

Nach dem Repulpieren des so erhaltenen Verbundmaterials waren die Papierfasern vollständig von der Polymerschicht getrennt. Zwischenschicht und Haftkleber lagen als Verbund vor. Über 95 % der gesamtem Polymerfläche lag in Partikeln größer 2 mm vor.

### Vergleichsbeispiel 1:

Es wurde analog Beispiel 1 vorgegangen, mit dem Unterschied, daß keine Zwischenschicht aufgetragen wurde, sondern die Haftkleber-Zusammensetzung aus Beispiel 1 direkt in einer Schichtdicke von 22 µm auf 80 g/m² Vellum-Papier aufgetragen wurde. Nach dem Repulpieren lagen über 50 % der Haftkleberschicht in nicht-siebbaren Partikeln kleiner 0.5 mm vor.

### Beispiel 2:

Es wurde analog Beispiel 1 vorgegangen, mit dem Unterschied, daß zur Herstellung der Zwischenschicht eine wässrige Dispersion eines Vinylacetat-Ethylen-Copolymeren mit 2 Gew% N-Methylolacrylamid, stabilisiert mit 5 Gew% Polyvinylalkohol (Hydrolysegrad 88 %) und 1 Gew% Alkylphenolethoxylat-Emulgator, jeweils bezogen auf den Polymeranteil, welche noch als Härter 3 Gew%, bezogen auf Dispersion, einer 50 %-igen wässrigen Lösung von Aluminiumchlorid-6-Hydrat enthielt, aufgetragen wurde. Die Dicke der trockenen Zwischenschicht betrug 15 µm. Als Haftkleber wurde der aus Beispiel 1 in einer Filmstärke (trocken) von ca. 17 µm aufgetragen.
Nach dem Repulpieren des so erhaltenen Verbundmaterials waren die Papierfasern vollständig von der Polymerschicht getrennt. Zwischenschicht und Haftkleber lagen als Verbund vor. Über 95 % der gesamtem Polymerfläche lag in Form siebbarer Partikel größer 2 mm vor.

### Beispiel 3:

Es wurde analog Beispiel 1 vorgegangen, mit dem Unterschied, daß zur Herstellung der Zwischenschicht eine wässrige Dispersion eines Copolymeren von Vinylacetat, Ethylen, n-Butylacrylat und N-Methylolacrylamid (Tg ca. -14°C) stabilisiert mit Alkylphenolethoxylat-Emulgator in einer Dicke von 12 µm (trocken) aufgetragen wurde. Als Haftkleber wurde der aus Beispiel 1 in einer Dicke (trocken) von ca. 15 µm aufgetragen. Nach dem Repulpieren des so erhaltenen Verbundmaterials waren die Papierfasern vollständig von der Polymerschicht getrennt. Zwischenschicht und Haftkleber lagen als Verbund vor. Über 95 % der gesamtem Polymerfläche lag in Form siebbarer Partikel größer 3 mm vor.

### Beispiel 4:

Es wurde analog Beispiel 1 vorgegangen, mit dem Unterschied, daß zur Herstellung der Zwischenschicht eine wässrige Dispersion eines Copolymeren von Vinylacetat und N-Methylolacrylamid (Tg ca. 35°C) stabilisiert mit Polyvinylalkohol (Hydrolysegrad 88 %), welche noch 2.5 Gew% Butyldiglykolacetat als Filmbildehilfsmittel und 2 Gew%, jeweils bezogen auf Dispersion, Aluminiumnitrat-9-Hydrat enthielt, in einer Dicke von 20 µm (trocken) aufgetragen wurde. Als Haftkleber wurde der aus Beispiel 1 in einer Dicke (trocken) von ca. 20 µm aufgetragen. Nach dem Repulpieren des so erhaltenen Verbundmaterials waren die Papierfasern vollständig von der Polymerschicht getrennt. Zwischenschicht und Haftkleber lagen als Verbund vor. Über 95 % der gesamtem Polymerfläche lag in Form siebbarer Partikel größer 1 mm vor.

### Beispiel 5:

Die Herstellung der Zwischenschicht erfolgte mit einer Filmbildehilfsmittel-haltigen wässrigen Dispersion eines Styrol-Butylacrylat-Copolymeren (Tg ca. 10°C), welche mit Alkylethoxylat-Emulgator stabilisiert war, in einer Schichtdicke von 18 µm. Als Haftkleber wurde eine wässrige Copolymerdispersion aus 2-Ethylhexylacrylat, n-Butylacrylat, Vinylacetat und Acrylsäure mit einer Tg von ca. -45'C verwendet. Der Haftkleber-Dispersion wurden vor dem Auftragen auf die Zwischenschicht 3 Gew%, bezogen auf Dispersion, eines wasseremulgierbaren, polyfunktionellen, oligomeren Isocyanats zugemischt. Die Topfzeit der Mischung betrug ca. 8 Stunden.
Nach Auftragung und Trocknen der Haftkleberschicht wurde repulpiert. Zwischenschicht und Haftkleber waren miteinander verankert und lagen als Verbund vor. Über 95 % der gesamtem Polymerfläche lag in Form siebbarer Partikel größer 3 mm vor.

### Beispiel 6:

Die Herstellung des Papierverbundmaterials erfolgte analog Beispiel 5 mit dem Unterschied, daß kein Isocyanat zur Haftkleber-Dispersion zugemischt wurde.
Nach dem Repulpieren lagen ca. 50 % der Polymerfläche in Form siebbarer Teilchen vor. Die Partikelgröße betrug über 1 mm.

### Beispiel 7:

Die Herstellung der Zwischenschicht erfolgte analog Beispiel 1. Als Haftkleber wurde eine wässrige Dispersion eines Copolymeren aus 2-Ethylhexylacrylat, n-Butylacrylat, Vinylacetat mit 2 Gew% N-Methylolacrylamid (Tg = -45°C) verwendet. Die Haftkleberschicht wurde bei über 130°C getrocknet; die Dicke betrug 20 µm (trocken).
Nach dem Repulpieren des so erhaltenen Verbundmaterials waren die Papierfasern vollständig von der Polymerschicht getrennt. Zwischenschicht und Haftkleber lagen als Verbund vor. Über 95 % der gesamtem Polymerfläche lag in Form siebbarer Partikel größer 2 mm vor.

### Beispiel 8:

Die Herstellung des Papierverbundmaterials erfolgte analog Beispiel 7, mit dem Unterschied, daß das Copolymer der Haftkleberdispersion kein N-Methylolacrylamid enthielt. Nach dem Trocknen der auf die Zwischenschicht in einer Dicke von 20 µm (trocken) aufgetragenen Haftkleberschicht wurde repulpiert. Nach dem Repulpieren wurde auf ca. 50 % der Polymerfläche Ablösung der Haftkleberschicht von der Zwischenschicht beobachtet. Die Partikelgröße betrug ca. 1 mm.

### Beispiel 9:

Die Herstellung der Zwischenschicht erfolgte analog Beispiel 1. Als Haftklebstoff wurde ein Schmelzhaftklebstoff bestehend aus 45 % eines Polystyrol-Polybutadien-Polystyrol-Blockcopolymeren, 53 % eines Kolophoniumharzesters als Tackifier und 2 % eines Antioxidants als Alterungsschutzmittels mit einem Rakel auf die Silikonseite eines silikonisierten Trennpapieres in einer Schichtdicke von 20 µm aufgetragen. Der mit der trockenen Zwischenschicht versehene Papierträger wurde anschließend auf das mit Schmelzhaftklebstoff beschichtete Trennpapier aufkaschiert. Dabei wurde die Haftklebstoffschicht auf die Zwischenschicht übertragen. Nach dem Repulpieren des so erhaltenen Verbundmaterials waren die Papierfasern vollständig von der Polymerschicht getrennt. Zwischenschicht und Schmelzhaftklebstoff lagen als Verbund vor. Über 95 % der gesamten Polymerfläche lagen in Form siebbarer Partikel größer 3 mm vor.

### Vergleichsbeispiel 2:

Es wurde analog Beispiel 1 vorgegangen, mit dem Unterschied, daß zur Herstellung der Zwischenschicht eine wässrige Dispersion eines Copolymeren aus Vinylacetat, Ethylen und 2-Ethylhexylacrylat, mit einer Tg von nur -35°C, stabilisiert mit Alkylphenolethoxylat-Emulgator in einer Dicke von 14 µm (trocken) aufgetragen wurde. Als Haftkleber wurde der aus Beispiel 1 in einer Dicke von ca. 18 µm (trocken) aufgetragen. Nach dem Repulpieren des so erhaltenen Verbundmaterials lagen weit über 50 % der gesamten Polymerfläche in Form nicht siebbarer Partikel kleiner 0.5 mm vor.

## Patentansprüche

1. Papierverbundmaterial mit repulpierfest ausgerüsteter Haftkleberbeschichtung, bestehend aus einem Papierträger und einer Haftkleberschicht, dadurch gekennzeichnet, daß zwischen Papierträger und Haftkleberschicht eine Zwischenschicht aus einem Schutzkolloid- und/oder Emulgatorhaltigen Dispersionspolymerfilm auf der Basis von Homo- oder Copolymerisaten aus der Gruppe der Homo- oder Copolymerisate von Vinylestern von Alkylcarbonsäuren mit 1 bis 15 C-Atomen, der Homo- oder Copolymerisate von Estern der (Meth)acrylsäure von Alkoholen mit 1 bis 12 C-Atomen, der Styrol-Butadien-Copolymerisate, mit einer Glasübergangstemperatur Tg von -20°C bis +40°C aufgetragen ist.

2. Verfahren zur Herstellung eines Papierverbundmaterials mit repulpierfest ausgerüsteter Haftkleberbeschichtung, dadurch gekennzeichnet, daß
a) in einem ersten Verfahrensschritt zur Herstellung der Zwischenschicht eine wäßrige Dispersion eines Schutzkolloid-und/oder Emulgator-stabilisierten Homo- oder Copolymerisats mit einer Glasübergangstemperatur Tg von -20°C bis +40°C aus der Gruppe der Homo- oder Copolymerisate von Vinylestern von Alkylcarbonsäuren mit 1 bis 15 C-Atomen, der Homo- oder Copolymerisate von Estern der (Meth)acrylsäure von Alkoholen mit 1 bis 12 C-Atomen, der Styrol-Butadien-Copolymerisate, aufgetragen und getrocknet wird, und
b) in einem zweiten Verfahrensschritt eine Haftklebstoff-Zusammensetzung auf die Polymerschicht aus dem ersten Verfahrensschritt aufgetragen und gegebenenfalls getrocknet wird.

3. Anspruch 1 oder 2, dadurch gekennzeichnet, daß die Zwischenschicht Vinylacetat-Homopolymerisat, Vinylacetat-Ethylen-Copolymere, Vinylacetat-Ethylen-Vinylchlorid-Copolymere, Vinylacetat-Copolymerisate mit Vinylester einer alpha-verzweigten Carbonsäure mit 5 bis 10 C-Atomen, Vinylacetat-n-Butylacrylat-Copolymerisate, Copolymerisate von Methylmethacrylat mit n-Butylacrylat und/oder 2-Ethylhexylacrylat, sowie Copolymerisate des n-Butylacrylats oder 2-Ethylhexylacrylats mit Styrol, welche gegebenenfalls noch wasserlösliche oder vernetzbare, ethylenisch ungesättigten Monomere enthalten, enthält bzw. diese Polymerisate zur Herstellung der Zwischenschicht eingesetzt werden.

4. Anspruch 3, dadurch gekennzeichnet, daß die Homo- und Copolymerisate bis zu einem Anteil von 5 Gew%, bezogen auf das Gesamtgewicht des Polymerisats, wasserlösliche, ethylenisch ungesättigte Monomere enthalten.

5. Anspruch 1 bis 4, dadurch gekennzeichnet, daß 0.1 bis 5 Gew%, bezogen auf Polymer, Emulgator und/oder 0.1 bis 15 Gew%, bezogen auf Polymer, Schutzkolloid, vorzugsweise teilverseifter Polyvinylalkohol mit einem Hydrolysegrad von 60 bis 95 Mol%, enthalten sind.

6. Anspruch 1 bis 5, dadurch gekennzeichnet, daß die Polymerisate zur Herstellung der Zwischenschicht noch 0.1 bis 5 Gew% ein oder mehrere Hilfsmonomere zur Vernetzung, oder vernetzend wirkende, mehrfach ethylenisch ungesättigte Comonomere, jeweils bezogen auf das Gesamtgewicht des Polymerisats, enthalten, oder 0.1 bis 3.0 Gew%, bezogen auf das Polymerisat, carbonylgruppenhaltige Comonomere wie Diacetonacrylamid oder Crotonaldehyd in Kombination mit hydrazidgruppenhaltigen Vernetzern oder mit aminooxygruppenhaltigen Vernetzern enthalten.

7. Anspruch 1 bis 6, dadurch gekennzeichnet, daß als Haftkleber solche auf der Basis von Acrylsäureester-Copolymeren, Copolymeren von Acrylsäureestern mit Vinylestern und gegebenenfalls Ethylen, Copolymeren von Acrylsäureestern oder Vinylestern mit Malein- und Fumarsäureestern, oder Styrol-Butadien-Blockcopolymeren, Styrol-Isopren-Blockcopolymeren mit einer Tg der Copolymeren unter -20°C, in Form von Polymerdispersionen, Schmelzklebern und strahlungsvernetzbaren Systemen, eingesetzt werden.

8. Anspruch 1 bis 7, dadurch gekennzeichnet, daß als Haftkleber-Schicht bzw. Haftkleber-Zusammensetzung solche mit di- oder multifunktionellen Vernetzern, welche mit hydroxy-, amid- oder carboxylfunktionellen Polymeren reagieren, eingesetzt werden.

9. Verfahren nach Anspruch 2, dadurch gekennzeichnet, daß in Verfahrenschritt a) die wäßrige Dispersion mit einem Rakel auf den Papierträger aufgetragen und getrocknet wird, oder auf ein mit Silikontrennschicht versehenes Papier aufgetragen, getrocknet und durch Zukaschieren auf den Papierträger übertragen wird und in Verfahrenschritt b) das Aufbringen der Haftkleberschicht entweder durch direkte Auftragung auf die Zwischenschicht, beispielsweise mittels Rakel oder Walzenauftrag und gegebenenfalls Trocknung oder Strahlenvernetzung, oder durch Beschichten eines Trennmaterials, vorzugsweise silikonisiertes Trennpapier, mit dem Haftklebstoff, gegebenenfalls Trocknung oder Strahlenvernetzung, und anschließend Zukaschieren des mit der Zwischenschicht versehenen Papierträgers erfolgt.

## Claims

1. Composite paper material with a pressure-sensitive adhesive coating finished to be resistant to repulping, comprising a paper carrier and a layer of pressure-sensitive adhesive, characterized in that an interlayer comprising a dispersion polymer film containing a protective colloid and/or an emulsifier and having a glass transition temperature Tg from -20°C to +40°C, based on homo- or copolymers from the group consisting of homo- or copolymers of vinyl esters of alkylcarboxylic acids having 1 to 15 C atoms, homo- or copolymers of esters of (meth)acrylic acid of alcohols having 1 to 12 C atoms, and styrene/butadiene copolymers, has been applied between the paper carrier and the layer of pressure-sensitive adhesive.

2. Process for producing a composite paper material with a pressure-sensitive adhesive coating, finished to be resistant to repulping, characterized in that
a) in a first process step for producing the interlayer, an aqueous dispersion of a homo- or copolymer, stabilized by a protective colloid and/or emulsifier and having a glass transition temperature Tg from -20°C to +40°C, from the group consisting of homo- or copolymers of vinyl esters of alkylcarboxylic acids having 1 to 15 C atoms, homo- or copolymers of esters of (meth)acrylic acid of alcohols having 1 to 12 C atoms, and styrene/butadiene copolymers, is applied and dried, and
b) in a second process step, a pressure-sensitive adhesive composition is applied to the polymer layer from the first process step and, if appropriate, is dried.

3. [lacuna] Claim 1 or 2, characterized in that the interlayer contains vinyl acetate homopolymer, vinyl acetate/ethylene copolymers, vinyl acetate/ethylene/vinyl chloride copolymers, vinyl acetate copolymers with the vinyl ester of an alpha-branched carboxylic acid having 5 to 10 C atoms, vinyl acetate/n-butyl acrylate copolymers, copolymers of methyl methacrylate with n-butyl acrylate and/or 2-ethylhexyl acrylate, and also copolymers of n-butyl acrylate or 2-ethylhexyl acrylate with styrene, which copolymers may, if appropriate, also contain watersoluble or crosslinkable, ethylenically unsaturated monomers, and/or these polymers are employed for producing the interlayer.

4. [lacuna] Claim 3, characterized in that the homo- and copolymers contain water-soluble, ethylenically unsaturated monomers up to a proportion of 5% by weight, relative to the total weight of the polymer.

5. [lacuna] Claims 1 to 4, characterized in that 0.1 to 5% by weight, relative to polymer, of emulsifier and/or 0.1 to 15% by weight, relative to polymer, of protective colloid, preferably partially saponified polyvinyl alcohol having a degree of hydrolysis of 60 to 95 mol %, are present.

6. [lacuna] Claims 1 to 5, characterized in that the polymers for producing the interlayer also contain 0.1 to 5% by weight of one or more auxiliary monomers for crosslinking or ethylenically polyunsaturated comonomers having a crosslinking action, each relative to the total weight of the polymer, or contain 0.1 to 3.0% by weight, relative to the polymer, of comonomers containing carbonyl groups, such as diacetoneacrylamide or crotonaldehyde, in combination with crosslinking agents containing hydrazide groups or crosslinking agents containing amino-oxy groups.

7. Material or process according to Claims 1 to 6, characterized in that the pressure-sensitive adhesives employed are those based on acrylic acid ester copolymers, copolymers of acrylic acid esters with vinyl esters and, if appropriate, ethylene, copolymers of acrylic acid esters or vinyl esters with esters of maleic and fumaric acids, or styrene/butadiene block copolymers, styrene/isoprene block copolymers, with a Tg of the copolymers below -20°C, in the form of polymer dispersions, hot-melt adhesives and radiation-crosslinkable systems.

8. [lacuna] Claims 1 to 7, characterized in that the pressure-sensitive adhesive layers and/or pressure-sensitive adhesive composition employed are those containing di- or polyfunctional crosslinking agents which react with hydroxyl-, amide- or carboxyl-functional polymers.

9. Process according to Claim 2, characterized in that, in process step a), the aqueous dispersion is applied to the paper carrier by means of a blade and is dried, or is applied to a paper provided with a silicone release layer, dried and transferred to the paper carrier by lamination and, in process step b), the application of the layer of pressure-sensitive adhesive is carried out either by direct application to the interlayer, for example by means of a blade or roller application, and, if appropriate, drying or radiative crosslinking, or by coating a release material, preferably siliconized release paper, with the pressure-sensitive adhesive, if appropriate drying it or radiatively crosslinking it, and subsequently laminating it to the paper carrier provided with the interlayer.

## Revendications

1. Matériau composite de papier avec un revêtement autoadhésif raffiné de manière à résister à la désintégration, constitué d'un support de papier et d'une couche autoadhésive, caractérisé en ce qu'entre le support de papier et la couche autoadhésive est appliquée une couche intermédiaire d'un film polymère en dispersion contenant un colloïde protecteur et/ou un émulsionnant, à base d'homopolymères ou de copolymères du groupe des homopolymères ou copolymères d'esters vinyliques d'acides alkylcarboxyliques avec 1 à 15 atomes de carbone, des homopolymères ou copolymères d'esters de l'acide (méth)acrylique d'alcools avec 1 à 12 atomes de carbone, des copolymères de styrène et de butadiène, avec une température de transition vitreuse Tg de -20°C à +40°C.

2. Procédé de préparation d'un matériau composite de papier avec un revêtement autoadhésif raffiné de manière à résister à la désintégration, caractérisé en ce que :
a) dans une première étape de procédé pour la préparation de la couche intermédiaire, on applique et on sèche une dispersion aqueuse d'un homopolymère ou d'un copolymère stabilisé par un colloïde protecteur et/ou par un émulsionnant, avec une température de transition vitreuse Tg de -20°C à +40°C, du groupe des homopolymères ou des copolymères d'esters vinyliques d'acides alkylcarboxyliques avec 1 à 15 atomes de carbone, des homopolymères ou copolymères d'esters de l'acide (méth)acrylique d'alcools avec 1 à 12 atomes de carbone, des copolymères de styrène et de butadiène, et
b) dans une deuxième étape de procédé, on applique et, le cas échéant, on sèche une composition de substances autoadhésives sur la couche polymère de la première étape de procédé.

3. Procédé selon la revendication 1 ou 2, caractérisé en ce que la couche intermédiaire contient un homopolymère d'acétate de vinyle, des copolymères d'acétate de vinyle et d'éthylène, des copolymères d'acétate de vinyle, d'éthylène et de chlorure de vinyle, des copolymères d'acétate de vinyle avec un ester vinylique d'un acide carboxylique ramifié en alpha avec 5 à 10 atomes de carbone, des copolymères d'acétate de vinyle et d'acrylate de n-butyle, des copolymères de méthylméthacrylate avec de l'acrylate de n-butyle et/ou du 2-éthylhexylacrylate, ainsi que des copolymères d'acrylate de n-butyle ou de 2-éthylhexylacrylate avec du styrène, lesquels, le cas échéant, contiennent encore des monomères éthyléniquement insaturés solubles dans l'eau ou réticulables, ou, selon le cas, ces polymères sont utilisés pour la préparation de la couche intermédiaire.

4. Procédé selon la revendication 3, caractérisé en ce que les homopolymères et les copolymères contiennent jusqu'à une proportion de 5% en poids, sur base du poids total du polymère, de monomères éthyléniquement insaturés solubles dans l'eau.

5. Procédé selon les revendications 1 à 4, caractérisé en ce que 0,1 à 5% en poids, sur base du polymère, d'émulsionnant et/ou 0,1 à 15% en poids, sur base du polymère, de colloïde protecteur, de préférence du poly(alcool vinylique) partiellement saponifié avec un degré d'hydrolyse de 60 à 95% en mole, sont contenus.

6. Procédé selon les revendications 1 à 5, caractérisé en ce que les polymères pour la préparation de la couche intermédiaire contiennent encore 0,1 à 5% en poids de un ou plusieurs monomères auxiliaires de réticulation, ou de comonomères éthyléniquement polyinsaturés à action réticulante, chaque fois sur base du poids total du polymère, ou 0,1 à 3,0% en poids, sur base du polymère, de comonomères contenant des groupements carbonyle, comme le diacétonacrylamide ou le crotonaldéhyde en combinaison avec des agents de réticulation contenant des groupements hydrazide ou avec des agents de réticulation contenant des groupements aminoxy.

7. Procédé selon les revendications 1 à 6, caractérisé en ce qu'on utilise comme autoadhésifs ceux à base de copolymères d'esters d'acide acrylique, de copolymères d'esters d'acide acrylique avec des esters vinyliques et, le cas échéant, avec de l'éthylène, de copolymères d'esters d'acide acrylique ou d'esters vinyliques avec des esters d'acides maléique et fumarique, ou de copolymères en blocs de styrène et de butadiène, de copolymères en blocs de styrène et d'isoprène, avec une Tg des copolymères en dessous de -20°C, sous forme de dispersions polymères, de colles à fusion et de systèmes réticulables par rayonnement.

8. Procédé selon les revendications 1 à 7, caractérisé en ce qu'on utilise comme couche autoadhésive ou, selon le cas, comme composition autoadhésive, celles avec des agents de réticulation difonctionnalisés ou multifonctionnalisés, lesquels réagissent avec des polymères à fonctionnalité hydroxyle, amide ou carboxyle.

9. Procédé suivant la revendication 2, caractérisé en ce que dans l'étape a) du procédé, la dispersion aqueuse est appliquée avec une racle sur le support de papier et est séchée, ou est appliquée sur un papier muni d'une couche de séparation en silicone, séchée et transférée sur le support de papier par laminage, et dans l'étape b) du procédé, l'application de la couche autoadhésive s'effectue soit par application directe sur la couche intermédiaire, par exemple, au moyen d'une racle ou d'une enduction par rouleau et le cas échéant, d'un séchage ou d'une réticulation par rayonnement, soit par revêtement d'un matériau de séparation, de préférence du papier de séparation siliconé, avec la matière autoadhésive, le cas échéant par séchage ou par réticulation par rayonnement, et ensuite par laminage du support de papier muni de la couche intermédiaire.
